# EUROPEAN PATENT SPECIFICATION

(11) **EP 4 269 285 B1**
(45) Date of publication and mention of the grant of the patent: **21.05.2025**
(21) Application number: 22848301.2
(22) Date of filing: 15.07.2022
(51) Int. Cl.: B65G 13/00, B65G 47/74, H01M 10/04

(54) **FEEDING DEVICE AND BATTERY PRODUCTION APPARATUS**
ZUFÜHRVORRICHTUNG UND BATTERIEHERSTELLUNGSVORRICHTUNG
DISPOSITIF D'ALIMENTATION ET APPAREIL DE PRODUCTION DE BATTERIE

(30) Priority: 30.07.2021 CN 202110876177
(43) Date of publication of application: 01.11.2023
(73) Proprietor: Contemporary Amperex Technology (Hong Kong) Limited, Central, Central And Western District (HK)
(72) Inventor: DAI, Liangzhen, Ningde, Fujian 352100 (CN); XIE, Zhi, Ningde, Fujian 352100 (CN); LI, Keqiang, Ningde, Fujian 352100 (CN); HU, Jun, Ningde, Fujian 352100 (CN); NI, Dajun, Ningde, Fujian 352100 (CN); WEN, Zhihua, Ningde, Fujian 352100 (CN)
(74) Representative: Thoma, Michael
(86) International application number: PCT/CN2022/106094
(87) International publication number: WO 2023/005696

(56) References cited:
- CN-A- 107 394 110
- CN-A- 111 037 349
- CN-B- 105 789 551
- JP-A- 2004 243 397
- US-A1- 2010 147 167
- US-B1- 6 378 862

## Description

The present application claims priority to Chinese patent application no. 202110876177.8, entitled "FEEDING DEVICE AND BATTERY PRODUCTION APPARATUS", filed on July 30, 2021.

### Technical Field

The present application relates to the technical field of battery production apparatuses, and in particular to a feeding device and a battery production apparatus.

### Background Art

Stacked cells have the advantages of high rate and high energy density over wound cells, and can also be made into various profiled batteries according to different requirements. Therefore, the stacked cells are generally used to produce batteries in the industry.

In the prior art, the battery production apparatus has a low stacking efficiency, which leads to a low production efficiency of the batteries and affects the production and manufacture of the batteries. A device for the precise positioning of materials in a processing machine is the subject of, among others, US 6 378 862 B1.

### Summary of the Invention

An object of the present application is to provide a feeding device and a battery production apparatus. By means of the feeding device, a saved structural space, increased feeding precision, improved feeding cycle, and improved production efficiency are achieved.

The present application is achieved by the following features.

In an aspect, an embodiment of the present application provides a feeding device, including:
a first linear driving mechanism including a first output end, the first output end being configured to reciprocate in a first direction;
a second linear driving mechanism including a second output end, the second output end being configured to reciprocate in a second direction;
a delivery mechanism, one end of which is rotatably connected to the first output end around a first axis, the first axis being perpendicular to the first direction; and
an adjusting mechanism configured to connect the other end of the delivery mechanism to the second output end, such that the delivery mechanism is able to be driven by the second output end to rotate around the first axis.

By means of the feeding device according to the embodiment of the present application, the feeding drive of the delivery mechanism can be realized by means of the cooperation of the first linear driving mechanism and the second linear driving mechanism, with a double feeding thrust, achieving a higher feeding acceleration and improving the feeding cycle; and the delivery mechanism is connected to the second output end by means of the adjusting mechanism, so that the delivery mechanism can be driven by the second output end to rotate around the first axis to adjust an angle of the delivery mechanism. The first linear driving mechanism and the second linear driving mechanism are not only used for feeding drive, but can also adjust the posture of the delivery mechanism, without separately providing a driving mechanism for adjusting the posture of the delivery mechanism, which reduces intermediate connecting portions, so that the feeding device has a compact structure, saves structural space, and has a double feeding thrust, improving the overall stability, increasing the feeding precision, and improving the production efficiency.

According to some embodiments of the present application, the adjusting mechanism includes a connector, one end of the connector is rotatably connected to the second output end around a second axis, and the other end of the connector is rotatably connected to the delivery mechanism around a third axis, the second axis being perpendicular to the second direction and parallel to the first axis, and the third axis being parallel to the second axis.

In the above solution, the delivery mechanism is connected to the second output end by means of the connector, and the connector is rotatably fitted with the delivery mechanism and the second output end, respectively, with a simple structure and more flexible adjustment of the angle of the delivery mechanism.

According to some embodiments of the present application, the adjusting mechanism includes a connector, one end of the connector is rotatably connected to the second output end around a second axis, the second axis being perpendicular to the second direction and parallel to the first axis, and the other end of the connector is slidably connected to the delivery mechanism.

In the above solution, one end of the connector is rotatably fitted with the second output end, and the other end of the connector is slidably fitted with the delivery mechanism, so that the connector can allow the delivery mechanism to be driven by the second output end to rotate around the first axis, with a compact structure, and more convenience to adjust the rotation angle of the delivery mechanism.

According to some embodiments of the present application, the adjusting mechanism includes a slider, the slider is arranged on one of the delivery mechanism and the second output end, the other of the delivery mechanism and the second output end is provided with a sliding groove, and the slider is slidably fitted within the sliding groove and is rotatable around a second axis relative to the sliding groove, the second axis being perpendicular to the second direction and parallel to the first axis.

In the above solution, by means of the cooperation of the slider and the sliding groove, the second output end drives the delivery mechanism to rotate around the first axis, with a simple and compact structure, and more convenience to adjust the rotation angle of the delivery mechanism.

The delivery mechanism further includes a first clamping member and a second clamping member that cooperate with each other to clamp a material.

In the above solution, by means of the cooperation of the first clamping member and the second clamping member, the material can be clamped or released, so as to facilitate the conveying of the material.

The first clamping member and/or the second clamping member are/is provided with an elastic member, and the elastic member is configured to abut against the material.

In the above solution, the elastic member abuts against the material, so that non-uniform contact between the clamping member and the material due to the deformation of the clamping member or the uneven surface of the clamping member for clamping the material can be avoided, ensuring uniform contact between the material and the clamping member, and improving the clamping effect of the material.

According to some embodiments of the present application, the first clamping member and/or the second clamping member are/is provided with a mounting face, the mounting face is provided with a groove, and the elastic member is arranged in the groove and protrudes from the mounting face.

In the above solution, on the one hand, arranging the elastic member in the groove facilitates the mounting and positioning of the elastic member, and ensures the stable assembly of the elastic member with the first clamping member and/or the second clamping member; on the other hand, part of the elastic member being arranged in the groove can increase the thickness of the elastic member to ensure sufficient deformation of the elastic member and ensure the clamping effect of the material.

According to some embodiments of the present application, a surface of the part of the elastic member protruding from the mounting face is arc-shaped.

In the above solution, on the one hand, the arc-shaped structure facilitates the change of the shape of the elastic member when abutting against the material, and the deformation of the elastic member in turn enables the uniform contact between the material and the clamping member; on the other hand, the arc-shaped structure can reduce damage to the material.

According to some embodiments of the present application, a plurality of elastic members are provided, and the plurality of elastic members are arranged at intervals in a lengthwise direction of the first clamping member.

In the above solution, the plurality of elastic members are distributed at a plurality of positions, which can compensate for the deformation of the clamping member at th plurality of positions, so as to ensure the uniform contact between the clamping member and the material.

According to some embodiments of the present application, the delivery mechanism further includes a cylinder for driving the first clamping member and the second clamping member to move close to or away from each other.

In the above solution, the cylinder drives the first clamping member and the second clamping member to move close to or away from each other, so that the speed at which the material is clamped or released is increased, thereby improving the feeding efficiency.

According to some embodiments of the present application, the first direction is parallel to the second direction.

In the above solution, the movement trajectories of the first output end and the second output end are parallel to each other, which can provide a double feeding thrust to achieve a higher feeding acceleration.

According to some embodiments of the present application, the feeding device further comprises: a third linear driving mechanism for driving the first linear driving mechanism and the second linear driving mechanism to move synchronously in a third direction, the third direction being perpendicular to the first axis, and the third direction intersecting the first direction and the second direction.

In the above solution, the third linear driving mechanism drives the first linear driving mechanism and the second linear driving mechanism to move synchronously in the third direction, so that the position of the delivery mechanism in the third direction can be adjusted so as to meet the requirements for the feeding posture of the material and achieve precise feeding.

According to some embodiments of the present application, the feeding device further comprises: a first mount, the first linear driving mechanism and the second linear driving mechanism being fixed on the first mount, and the third linear driving mechanism being connected to the first mount.

In the above solution, the mounting and positioning of the first linear driving mechanism and the second linear driving mechanism are realized by means of the first mount, ensuring that the first linear driving mechanism and the second linear driving mechanism can move synchronously under the action of the third linear driving mechanism to ensure the movement precision.

According to some embodiments of the present application, the feeding device further comprises: a second mount, the first mount being slidably mounted on the second mount in the third direction, and the third linear driving mechanism being fixed on the second mount and connected to the first mount to drive the first mount to move relative to the second mount in the third direction.

In the above solution, the first mount is slidingly fitted with the second mount, and the first mount moves stably relative to the second mount under the action of the third linear driving mechanism.

In another aspect, an embodiment of the present application provides a battery production apparatus, including: a rolling device for attaching an electrode plate to a separator; and a feeding device as described above, the feeding device being used to feed the electrode plate into the rolling device.

By means of the battery production apparatus according to the embodiment of the present application, the electrode plate is fed into the rolling device by means of the feeding device, which can meet the feeding precision requirements for the electrode plate and ensure the battery production quality.

Some of the additional aspects and advantages of the present application will be set forth in the following description, and some will become apparent from the following description, or be learned by practice of the present application.

### Brief Description of the Drawings

In order to more clearly describe the technical solutions of the embodiments of the present application, the accompanying drawings required in the embodiments will be described briefly below. It should be understood that the following accompanying drawings illustrate only some embodiments of the present application and therefore should not be construed as a limitation on the scope thereof. For those of ordinary skill in the art, other relevant accompanying drawings can also be obtained from these accompanying drawings without any creative effort.
FIG. 1 is a schematic partial structural diagram of a battery production apparatus according to an embodiment of the present application;
FIG. 2 is a schematic structural diagram of a feeding device according to an embodiment of the present application;
FIG. 3 is a schematic diagram of a feeding device according to an embodiment of the present application;
FIG. 4 is a schematic diagram of a feeding device according to another embodiment of the present application;
FIG. 5 is a top view of a feeding device according to an embodiment of the present application;
FIG. 6 is a step sectional view along a line A-A in FIG. 5;
FIG. 7 is an enlarged view of part B in FIG. 6;
FIG. 8 is an enlarged view of part C in FIG. 6;
FIG. 9 is a schematic diagram of a feeding device according to yet another embodiment of the present application;
FIG. 10 is an enlarged view of part D in FIG. 9;
FIG. 11 is a schematic diagram of a feeding device according to still another embodiment of the present application;
FIG. 12 is an enlarged view of part E in FIG. 11;
FIG. 13 is a schematic structural diagram of a delivery mechanism according to an embodiment of the present application;
FIG. 14 is an enlarged view of part F in FIG. 13; and
FIG. 15 is a schematic assembly diagram of a feeding device according to an embodiment of the present application.

In the accompanying drawings, the figures are not drawn to scale.

List of reference signs: 100 - Feeding device; 11 - First linear driving mechanism; 111 - First output end; 12 - Second linear driving mechanism; 121 - Second output end; 13 - Third linear driving mechanism; 131 - Driving electric motor; 132 - Lead screw; 133 - Nut; 20 - Delivery mechanism; 21 - First connecting portion; 22 - Second connecting portion; 23 - Base; 24 - First clamping member; 25 - Second clamping member; 251 - Mounting face; 252 - Groove; 26 - Elastic member; 27 - Cylinder; 28 - Fixing shaft; 30 - Adjusting mechanism; 31 - Connector; 311 - First shaft section; 312 - Second shaft section; 313 - Recessed sliding groove; 32 - Sliding groove; 33 - Slider; 41 - First mount; 42 - Second mount; 421 - Slide rail; 500 - Rolling device; 51 - Roller; X - Feeding direction; X1 - First direction; X2 - Second direction; Y - Third direction; Z1 - First axis; Z2 - Second axis; Z3 - Third axis; P - Electrode plate; M - Separator.

### Detailed Description of Embodiments

In order to make the objects, technical solutions and advantages of embodiments of the present application clearer, the technical solutions in the embodiments of the present application will be described clearly and completely below with reference to the accompanying drawings in the embodiments of the present application. Obviously, the embodiments described are some of, rather than all of, the embodiments of the present application. All the other embodiments obtained by those of ordinary skill in the art based on the embodiments of the present application without creative efforts shall fall within the scope of protection of the present application.

Unless otherwise defined, all technical and scientific terms used in the present application have the same meanings as those commonly understood by those skilled in the art to which the present application belongs; the terms used in the description of the present application are merely for the purpose of describing specific embodiments, but are not intended to limit the present application. The terms "comprising" and "having" and any variations thereof in the description and the claims of the present application as well as the brief description of the drawings described above are intended to cover non-exclusive inclusion. The terms "first", "second", etc. in the description and the claims of the present application as well as the foregoing drawings are used to distinguish between different objects, rather than describing a specific order or a primary-secondary relationship.

In the present application, "embodiment" mentioned means that the specific features, structures and characteristics described in conjunction with the embodiments may be included in at least one embodiment of the present application. The phrase at various locations in the description does not necessarily refer to the same embodiment, or an independent or alternative embodiment exclusive of another embodiment. Those skilled in the art should understand, in explicit and implicit manners, that an embodiment described in the present application may be combined with another embodiment.

In the description of the present application, it should be noted that, the terms "mount", "connected", "connect", or "attach" should be interpreted in a broad sense unless explicitly defined and limited otherwise. For example, they may be a fixed connection, a detachable connection, or an integral connection; or may be a direct connection, an indirect connection by means of an intermediate medium, or internal communication between two elements. For those of ordinary skills in the art, the specific meaning of the foregoing terms in the present application may be understood according to specific circumstances.

The term "and/or" in the present application is merely a description of the associated relationship of associated objects, representing that three relationships may exist, for example, A and/or B, may be expressed as: the three instances of A alone, A and B simultaneously, and B alone. In addition, the character "/" in the present application generally indicates that the associated objects before and after the character are in a relationship of "or".

In the present application, "a plurality of" means two or more (including two), and similarly, "a plurality of groups" means two or more groups (including two groups), and "a plurality of pieces" means two or more pieces (including two pieces).

A battery mentioned in the present application refers to a single physical module including one or more battery cells to provide a high voltage and capacity. For example, the battery mentioned in the present application may include a battery module, a battery pack, etc.

The inventor found through researches that a low production efficiency of a battery production apparatus is mainly determined by feeding of an electrode plate. The feeding of the electrode plate is a key factor to determine the stacking efficiency and a misalignment value for positive and negative electrode plates. If the misalignment value for the positive and negative electrode plates exceeds a specification, the quality of stacking will be affected, and then the production efficiency will be affected. The misalignment value refers to a size by which the negative electrode plate exceeds the positive electrode plate.

The inventor further found through researches that in the related art, a feeding driving mechanism, a rotation adjusting driving mechanism and a position adjusting driving mechanism of a feeding device are stacked layer by layer to complete an automatic adjustment of feeding of an electrode plate, the feeding driving mechanism is used to drive the position adjusting driving mechanism and the rotation adjusting driving mechanism to move in a feeding direction at the same time, the position adjusting driving mechanism is used to adjust the position offset of the electrode plate in a width direction of a separator, the rotation adjusting driving mechanism is used to adjust a rotation angle of the electrode plate in a horizontal plane. This type of technology has the following problems: large occupied space and bulky structure; low feeding precision, too many intermediate connecting mechanisms, and processing and assembly errors and deformation between the mechanisms, which easily leads to magnifying of the feeding error of the electrode plate, reduction of the feeding precision, and a high scrap rate of batteries; and large load of a feeding driving electric motor, and low feeding acceleration, which will greatly reduce the feeding efficiency.

In view of this, the present application provides a feeding device, which includes a first linear driving mechanism, a second linear driving mechanism, a delivery mechanism, and an adjusting mechanism, where the first linear driving mechanism includes a first output end configured to reciprocate in a first direction; the second linear driving mechanism includes a second output end configured to reciprocate in a second direction; one end of the delivery mechanism is rotatably connected to the first output end around a first axis, the first axis being perpendicular to the first direction; and the adjusting mechanism is configured to connect the other end of the delivery mechanism to the second output end, such that the delivery mechanism can be driven by the second output end to rotate around the first axis. The feeding drive of the delivery mechanism can be realized by means of the cooperation of the first linear driving mechanism and the second linear driving mechanism, with a double feeding thrust, achieving a higher feeding acceleration and improving the feeding cycle; and the second output end is connected to the delivery mechanism by means of the adjusting mechanism, so that the second output end can drive the delivery mechanism to rotate around the first axis, thereby adjusting the angle of the delivery mechanism, that is, adjusting the posture of the delivery mechanism and the material carried by the delivery mechanism. The first linear driving mechanism and the second linear driving mechanism are not only used for feeding drive, but can also adjust the posture of the delivery mechanism, without separately providing a driving mechanism for adjusting the posture of the delivery mechanism, which reduces intermediate connecting portions, so that the feeding device has a compact structure, saves structural space, and has a double feeding thrust, improving the overall stability, increasing the feeding precision, and improving the production efficiency.

It should be noted that the feeding device according to the embodiment of the present application is not limited to the feeding of the electrode plate, and may also be used to feed other materials (such as sheets) to ensure precise feeding of the material. In the embodiment of the present application, the feeding device will be introduced by taking the feeding of the electrode plate as an example.

To better understand the present application, the feeding device and battery production apparatus according to embodiments of the present application will be described in detail below with reference to the accompanying drawings.

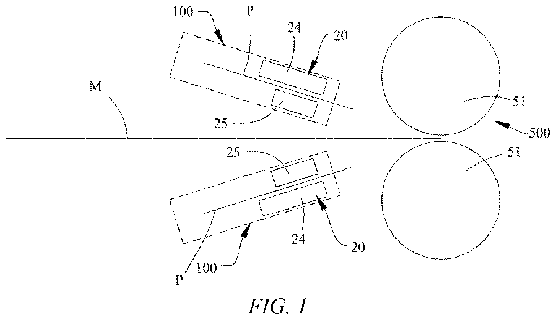

Referring to FIG. 1, FIG. 1 is a schematic partial structural diagram of a battery production apparatus according to an embodiment of the present application. According to embodiments of the present application, a battery production apparatus is provided, which includes a rolling device 500 and a feeding device 100.

The rolling device 500 is used to attach an electrode plate P to a separator M, and the feeding device 100 is used to feed the electrode plate P into the rolling device 500. The rolling device 500 includes two opposite rollers 51, the separator M is fed between the two rollers 51, and the feeding device 100 is used to feed the electrode plate P into the rolling device 500, such that the electrode plate P and the separator M are rolled by the two rollers 51 of the rolling device 500 to attach the electrode plate P to the separator M. The feeding precision of the feeding device 100 affects the efficiency and quality of the stacking.

As shown in FIG. 1, one feeding device 100 is provided on either side of the separator M in a thickness direction thereof, for example, two feeding devices 100 each are used to feed a positive electrode plate.

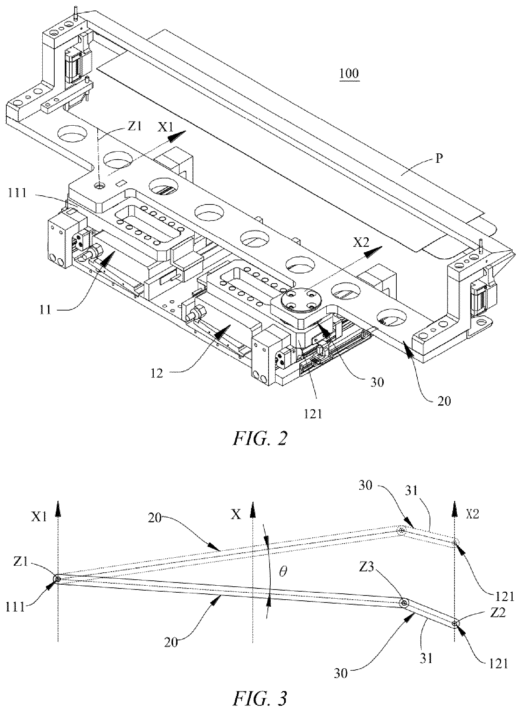

Referring to FIGS. 2 and 3, FIG. 2 shows a schematic structural diagram of a feeding device 100 according to an embodiment of the present application, and FIG. 3 shows a schematic diagram of the feeding device 100 according to an embodiment of the present application.

The feeding device 100 according to the embodiment of the present application includes a first linear driving mechanism 11, a second linear driving mechanism 12, a delivery mechanism 20, and an adjusting mechanism 30.

The first linear driving mechanism 11 includes a first output end 111. The first output end 111 is configured to reciprocate in a first direction X1, that is, a movement trajectory of the first output end 111 is a straight line extending in the first direction X1. The second linear driving mechanism 12 includes a second output end 121. The second output end 121 is configured to reciprocate in a second direction X2, that is, a movement trajectory of the second output end 121 is a straight line extending in the second direction X2. One end of the delivery mechanism 20 is rotatably connected to the first output end 111 around a first axis Z1, the first axis Z1 being perpendicular to the first direction X1. The adjusting mechanism 30 is configured to connect the other end of the delivery mechanism 20 to the second output end 121, such that the delivery mechanism 20 can be driven by the second output end 121 to rotate around the first axis Z1. When the second output end 121 moves in the second direction X2, the second output end 121 can drive the delivery mechanism 20 to rotate around the first axis Z1 by means of the adjusting mechanism 30.

It should be noted that the first direction X1 is coplanar with the second direction X2, that is, the movement trajectory of the first output end 111 and the movement trajectory of the second output end 121 are coplanar, and the first axis Z1 is also perpendicular to the second direction X2. When the first linear driving mechanism 11 and the second linear driving mechanism 12 are in operation, the first output end 111 and the second output end 121 can jointly drive the delivery mechanism 20 to move, so as to realize the feeding drive of the delivery mechanism 20. The delivery mechanism 20 can carry the electrode plate P, and feed the electrode plate P under the driving of the first linear driving mechanism 11 and the second linear driving mechanism 12.

By means of the feeding device 100 according to the embodiment of the present application, the feeding drive of the delivery mechanism 20 can be realized by means of the cooperation of the first linear driving mechanism 11 and the second linear driving mechanism 12, with a double feeding thrust, achieving a higher feeding acceleration and improving the feeding cycle; and the delivery mechanism 20 is connected to the second output end 121 by means of the adjusting mechanism 30, so that the delivery mechanism 20 can be driven by the second output end 121 to rotate around the first axis Z1 to adjust an angle of the delivery mechanism 20, that is, to adjust the posture of the delivery mechanism 20 and the electrode plate P. The first linear driving mechanism 11 and the second linear driving mechanism 12 are not only used for feeding drive, but can also adjust the posture of the delivery mechanism 20 and the electrode plate P, without separately providing a driving mechanism for adjusting the posture of the delivery mechanism 20 and the electrode plate P, which reduces intermediate connecting portions, so that the feeding device 100 has a compact structure, saves structural space, has a double feeding thrust, improving the overall stability, increasing the feeding precision, and improving the production efficiency.

The operation principle of the feeding device 100 is that the first output end 111 and the second output end 121 jointly push the delivery mechanism 20 to move, and the second output end 121 drives the delivery mechanism 20 to rotate around the first axis Z1 by means of the adjusting mechanism 30 to change an angle θ between the delivery mechanism 20 and an initial state, and at the same time, the feeding drive of the delivery mechanism 20 is realized by means of the movement of the first output end 111 and the movement of the second output end 121. The feeding drive of the delivery mechanism 20 and the rotation adjustment of the delivery mechanism 20 may be carried out synchronously, or the rotation adjustment of the delivery mechanism 20 may be carried out before the feeding drive of the delivery mechanism 20 is carried out.

The specific driving modes may be as follows. For example, the first output end 111 stops, the second output end 121 moves in the second direction X2, such that the second output end 121 drives the delivery mechanism 20 to rotate around the first axis Z1 by the angle θ by means of the adjusting mechanism 30, and the electrode plate P carried by the delivery mechanism 20 reaches a preset posture, and then the first output end 111 and the second output end 121 move synchronously to feed the electrode plate P in the preset posture. As another example, the second output end 121 stops, the first output end 111 moves in the first direction X1, such that the second output end 121 drives the delivery mechanism 20 to rotate around the first axis Z1 by the angle θ, and the electrode plate P carried by the delivery mechanism 20 reaches a preset posture, and then the first output end 111 and the second output end 121 move synchronously to feed the electrode plate P in the preset posture. As still another example, both the first output end 111 and the second output end 121 move, but the moving speeds of the second output end 121 and the first output end 111 are different from each other, such that the second output end 121 drives the delivery mechanism 20 to rotate around the first axis Z1 by the angle θ by means of the adjusting mechanism 30, and the electrode plate P carried by the delivery mechanism 20 reaches a preset posture, and then the first output end 111 and the second output end 121 move synchronously to feed the electrode plate P in the preset posture.

The first linear driving mechanism 11 and the second linear driving mechanism 12 may be in various structural forms, for example, the first linear driving mechanism 11 and the second linear driving mechanism 12 may be linear electric motors; alternatively, the first linear driving mechanism 11 and the second linear driving mechanism 12 may also be a combination of an electric motor and a transmission assembly, and the transmission assembly may be a belt transmission assembly, a chain transmission assembly, a lead screw and nut transmission assembly, etc.

In some embodiments, the first linear driving mechanism 11 and the second linear driving mechanism 12 are linear electric motors, with a simple structure, high movement precision, and convenience to maintain.

According to some embodiments of the present application, the first direction X1 may be parallel to the second direction X2, that is, the movement trajectory of the first output end 111 is parallel to the movement trajectory of the second output end 121. As shown in FIG. 3, based on the fact that the movement trajectory of the first output end 111 is parallel to the movement trajectory of the second output end 121, both the first direction X1 and the second direction X2 are consistent with a feeding direction X, which can not only provide a double feeding thrust to achieve a higher feeding acceleration, but can also ensure feeding stability.

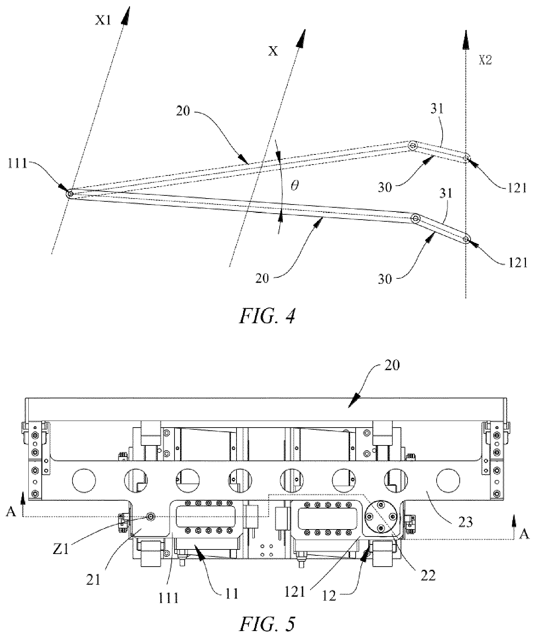

According to some other embodiments of the present application, the first direction X1 may intersect the second direction X2, that is, the movement trajectory of the first output end 111 is arranged at an angle with the movement trajectory of the second output end 121, and an extending direction of the movement trajectory of the first output end 111 intersects an extending direction of the movement trajectory of the second output end 121. For example, FIG. 4 shows a schematic diagram of a feeding device 100 according to another embodiment of the present application. As shown in FIG. 4, the first direction X1 may be consistent with the feeding direction X, and an angle may be formed between the second direction X2 and the feeding direction X; alternatively, the second direction X2 may be consistent with the feeding direction X, and an angle may be formed between the first direction X1 and the feeding direction X; still alternatively, an angle may be formed between both the first direction X1 and the second direction X2 and the feeding direction X.

For ease of writing, in the embodiment of the present application, the feeding device 100 is described by taking the first direction X1 being parallel to the second direction X2 as an example.

According to some embodiments of the present application, as shown in FIGS. 3 and 4, the adjusting mechanism 30 includes a connector 31, one end of the connector 31 is rotatably connected to the second output end 121 around a second axis Z2, and the other end of the connector 31 is rotatably connected to the delivery mechanism 20 around a third axis Z3, the second axis Z2 being perpendicular to the second direction X2 and parallel to the first axis Z1, and the third axis Z3 being parallel to the second axis Z2. The connector 31 and the delivery mechanism 20 may be regarded as forming a two-link mechanism, the delivery mechanism 20 is connected to the second output end 121 by means of the connector 31, and the connector 31 is rotatably fitted with the delivery mechanism 20 and the second output end 121, respectively, with a simple structure and more flexible adjustment of the angle of the delivery mechanism 20.

FIG. 5 shows a top view of a feeding device 100 according to an embodiment of the present application. According to some embodiments of the present application, as shown in FIG. 5, the delivery mechanism 20 includes a first connecting portion 21 and a second connecting portion 22 arranged opposite each other. The first connecting portion 21 and the second connecting portion 22 may be arranged opposite each other in a lengthwise direction of the delivery mechanism 20, and the lengthwise direction of the delivery mechanism 20 may be perpendicular to the feeding direction X (referring to FIGS. 3 and 4). The first connecting portion 21 is arranged on one end of the delivery mechanism 20, and the second connecting portion 22 is arranged on the other end of the delivery mechanism 20. The first connecting portion 21 is rotatably connected to the first output end 111 around the first axis Z1, and the second connecting portion 22 is connected to the second output end 121 by means of the adjusting mechanism 30 (referring to FIGS. 3 and 4).

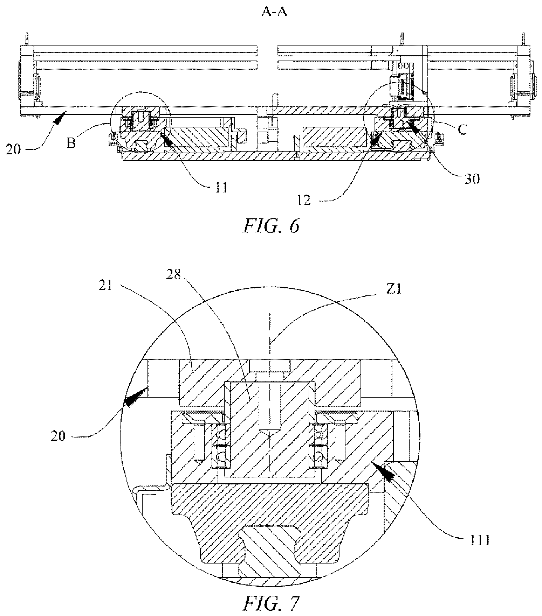

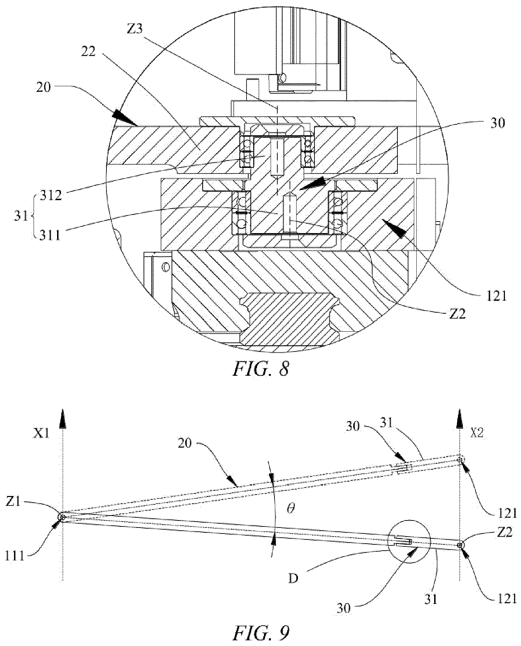

FIG. 6 shows a step sectional view along a line A-A in FIG. 5, FIG. 7 shows an enlarged view of part B in FIG. 6, and FIG. 8 shows an enlarged view of part C in FIG. 6.

As shown in FIG. 7, a fixing shaft 28 is provided at one end of the delivery mechanism 20, that is, the first connecting portion 21 is provided with a fixing shaft 28, the fixing shaft 28 is rotatably fitted with the first output end 111, and a central axis of the fixing shaft 28 is the first axis Z1. For example, the fixing shaft 28 is connected to the first output end 111 by means of a bearing. In other embodiments of the present application, the fixing shaft 28 may also be arranged at the first output end 111, and the delivery mechanism 20 is rotatably fitted with the fixing shaft 28.

As shown in FIG. 8, the connector 31 may be an eccentric shaft, and the connector 31 includes a first shaft section 311 and a second shaft section 312, a central axis of the first shaft section 311 being parallel to a central axis of the second shaft section 312. The first shaft section 311 is rotatably fitted with the second output end 121, the second shaft section 312 is rotatably fitted with the delivery mechanism 20, that is, the second shaft section 312 is rotatably fitted with the second connecting portion 22, the central axis of the first shaft section 311 is the second axis Z2, and the central axis of the second shaft section 312 is the third axis Z3. For example, the first shaft section 311 is connected to the second output end 121 by means of a bearing, and the second shaft section 312 is connected to the delivery mechanism 20 by means of a bearing.

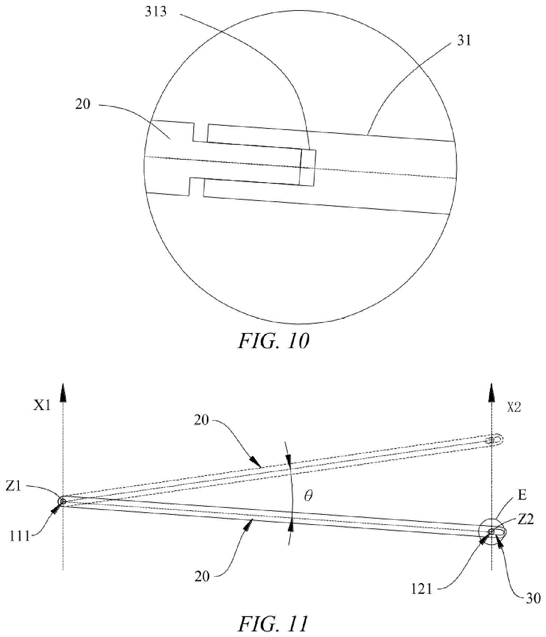

FIG. 9 shows a schematic diagram of a feeding device 100 according to yet another embodiment of the present application, and FIG. 10 is an enlarged view of part D in FIG. 9. According to some embodiments of the present application, as shown in FIGS. 9 and 10, the adjusting mechanism 30 includes a connector 31, one end of the connector 31 is rotatably connected to the second output end 121 around the second axis Z2, the second axis Z2 being perpendicular to the second direction X2 and parallel to the first axis Z1, and the other end of the connector 31 is slidably connected to the delivery mechanism 20. When the connector 31 moves with the second output end 121, the connector 31 rotates around the second axis Z2, and at the same time the connector 31 slides relative to the delivery mechanism 20, driving the delivery mechanism 20 to rotate around the first axis Z1 by an angle θ. This adjustment method enables a compact structure, and more convenience to adjust the rotation angle θ of the delivery mechanism 20.

As shown in FIGS. 9 and 10, a recessed sliding groove 313 may be provided at the other end of the connector 31, and the delivery mechanism 20 is slidably fitted with the recessed sliding groove 313, so as to realize the sliding fit between the delivery mechanism 20 and the connector 31. In other embodiments of the present application, a recessed sliding groove may be provided at the end of the delivery mechanism 20 connected to the connector 31, and the connector 31 is slidably fitted within the recessed sliding groove, so as to realize the sliding fit between the connector 31 and the delivery mechanism 20.

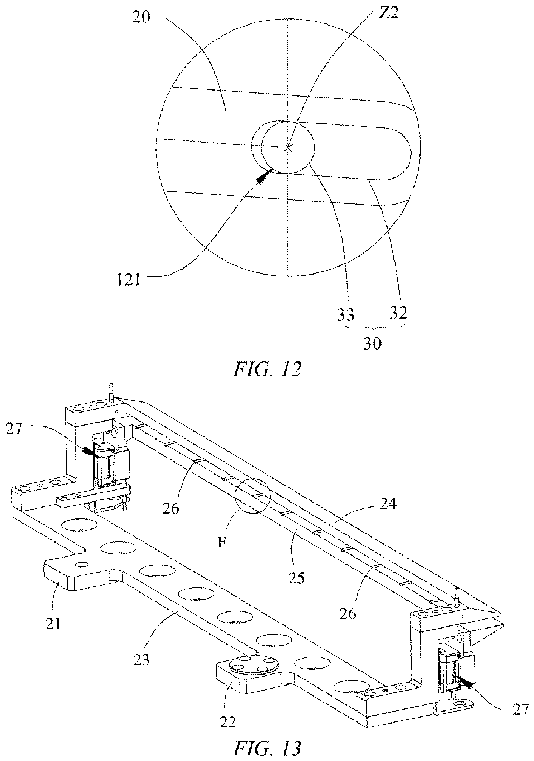

FIG. 11 shows a schematic diagram of a feeding device 100 according to still another embodiment of the present application, and FIG. 12 is an enlarged view of part E in FIG. 11. According to some embodiments of the present application, as shown in FIGS. 11 and 12, the adjusting mechanism 30 includes a slider 33, the slider 33 is arranged on one of the delivery mechanism 20 and the second output end 121, the other of the delivery mechanism 20 and the second output end 121 is provided with a sliding groove 32, and the slider 33 is slidably fitted within the sliding groove 32 and is rotatable around the second axis Z2, the second axis Z2 being perpendicular to the second direction X2 and parallel to the first axis Z1. By means of the cooperation of the slider 33 and the sliding groove 32, the second output end 121 drives the delivery mechanism 20 to rotate around the first axis Z1, with a simple and compact structure, and more convenience to adjust the angle of the delivery mechanism 20.

For example, as shown in FIGS. 11 and 12, the sliding groove 32 may be arranged on the delivery mechanism 20, the slider 33 may be arranged on the second output end 121, and when the second output end 121 drives the slider 33 to move in the sliding groove 32, the sliding groove 32 and the slider 33 rotate around the second axis Z2 to realize the rotation of the delivery mechanism 20 relative to the first output end 111 around the first axis Z1. The change of the position of the slider 33 in the sliding groove 32 can be converted into the rotation angle θ of the delivery mechanism 20 around the first axis Z1.

FIG. 13 is a schematic structural diagram of a delivery mechanism 20 according to an embodiment of the present application. As shown in FIG. 13, the delivery mechanism 20 includes a first clamping member 24 and a second clamping member 25 that cooperate with each other to clamp the electrode plate P (as shown in FIG. 1). By means of the cooperation of the first clamping member 24 and the second clamping member 25, the electrode plate P can be clamped or released, so as to facilitate the conveying of the electrode plate P. In other embodiments of the present application, the delivery mechanism 20 may also deliver a material by means of suction, or by means of magnetic attraction.

It should be noted that each of the first clamping member 24 and the second clamping member 25 has a certain length, and a lengthwise direction of the first clamping member 24 and a lengthwise direction of the second clamping member 25 may be the lengthwise direction of the delivery mechanism 20, so as to have a larger contact area with the electrode plate and ensure a better clamping effect.

According to some embodiments of the present application, as shown in FIG. 13, the delivery mechanism 20 further includes a cylinder 27 for driving the first clamping member 24 and the second clamping member 25 to move close to or away from each other. The cylinder 27 drives the first clamping member 24 and the second clamping member 25 to move close to or away from each other, so that the speed at which the electrode plate P is clamped or released is increased, thereby improving the feeding efficiency.

In other embodiments of the present application, the first clamping member 24 and the second clamping member 25 may also be driven to move close to or away from each other by other driving modes, for example, the driving mode of the cooperation of an electric motor and a lead screw and nut, of a hydraulic cylinder, of an electric push rod, of the cooperation of an electric motor and a rack and pinion, etc.

According to some embodiments of the present application, as shown in FIG. 13, the delivery mechanism 20 further includes a base 23. The first connecting portion 21 and the second connecting portion 22 are arranged at opposite ends of the base 23, the first connecting portion 21 and the second connecting portion 22 are located on one side of the base 23, and the first clamping member 24 and the second clamping member 25 are located on the other side of the base 23 for convenience to clamp the electrode plate P (as shown in FIG. 1) and convey the electrode plate P. The first clamping member 24 is mounted on the base 23, and the second clamping member 25 is slidably fitted with the base 23. When the second clamping member 25 moves toward the first clamping member 24, the second clamping member 25 and the first clamping member 24 cooperate to be able to clamp the electrode plate P; and when the second clamping member 25 moves away from the first clamping member 24, a distance between the second clamping member 25 and the first clamping member 24 increases to be able to release the electrode plate P. As shown in FIG. 13, the second clamping member 25 is connected to an output end of the cylinder 27, and the second clamping member 25 can move close to or away from the first clamping member 24 under the action of the cylinder 27.

In order to ensure a stable movement of the first clamping member 24 and the second clamping member 25 relative to each other, as shown in FIG. 13, two cylinders 27 are provided, and the two cylinders 27 are arranged at intervals in the lengthwise direction of the first clamping member 24 (or the second clamping member 25), that is, in the lengthwise direction of the delivery mechanism 20.

According to some other embodiments of the present application, the movement of the first clamping member 24 and the second clamping member 25 relative to each other is realized by two cylinders 27, that is, one of the cylinders 27 drives the first clamping member 24 to move, and the other of the cylinders 27 drives the second clamping member 25 to move. In this solution, the first clamping member 24 and the second clamping member 25 are respectively slidably fitted with the base 23.

As shown in FIG. 13, the first clamping member 24 and/or the second clamping member 25 are/is provided with an elastic member 26, and the elastic member 26 is configured to abut against the electrode plate P (as shown in FIG. 1). When the first clamping member 24 and the second clamping member 25 clamp the electrode plate P, the elastic member 26 abuts against the electrode plate **P,** and the elastic member 26 is deformed to avoid non-uniform contact between the clamping member (a general term for the first clamping member 24 and the second clamping member 25) and the electrode plate P due to the deformation of the clamping member or the uneven surface of the clamping member for clamping the electrode plate P, ensuring uniform contact between the electrode plate P and the clamping member, and improving the clamping effect of the electrode plate P.

For example, the first clamping member 24 is provided with the elastic member 26, and the elastic member 26 is located on a side of the first clamping member 24 facing the second clamping member 25; alternatively, the second clamping member 25 is provided with the elastic member 26, and the elastic member 26 is located on a side of the second clamping member 25 facing the first clamping member 24; still alternatively, each of the first clamping member 24 and the second clamping member 25 is provided with the elastic member 26, the elastic member 26 on the first clamping member 24 is located on the side of the first clamping member 24 facing the second clamping member 25, and the elastic member 26 on the second clamping member 25 is located on the side of the second clamping member 25 facing the first clamping member 24.

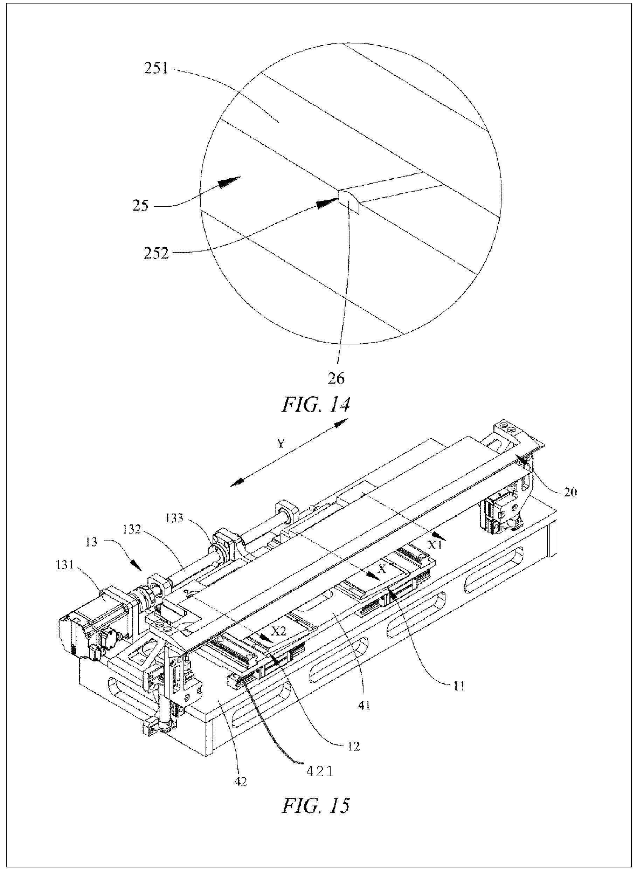

FIG. 14 shows an enlarged view of part F in FIG. 13. According to some embodiments of the present application, as shown in FIGS. 13 and 14, the first clamping member 24 and/or the second clamping member 25 are/is respectively provided with a mounting face 251, and the mounting face 251 is a surface of the first clamping member 24 and/or the second clamping member 25 for clamping the electrode plate P (as shown in FIG. 1). The mounting face 251 is provided with a groove 252, and the elastic member 26 is arranged in the groove 252 and protrudes from the mounting face 251. For example, a surface at the side of the first clamping member 24 facing the second clamping member 25 is provided with the groove 252, alternatively, a surface at the side of the second clamping member 25 facing the first clamping member 24 is provided with the groove 252, still alternatively, each of the surface at the side of the first clamping member 24 facing the second clamping member 25 and the surface at the side of the second clamping member 25 facing the first clamping member 24 is provided with the groove 252. On the one hand, arranging the elastic member 26 in the groove 252 facilitates the mounting and positioning of the elastic member 26, and ensures the stable assembly of the elastic member 26 with the first clamping member 24 and/or the second clamping member 25; on the other hand, part of the elastic member 26 being arranged in the groove 252 can increase the thickness of the elastic member 26 to ensure sufficient deformation of the elastic member 26 and ensure the clamping effect of the electrode plate P.

As shown in FIGS. 13 and 14, the mounting face 251 of the second clamping member 25 is provided with the groove 252, and the elastic member 26 is arranged in the groove 252 and protrudes from the mounting face 251. When the first clamping member 24 and the second clamping member 25 move close to each other to clamp the electrode plate P (as shown in FIG. 1), the elastic member 26 abuts against the electrode plate P and deforms to compensate for the deformation of the clamping member or the uneven surface of the clamping member for clamping the electrode plate P, and the deformation of the elastic member 26 enables the uniform contact between the electrode plate P and the clamping member.

According to some embodiments of the present application, as shown in FIG. 14, the part of the elastic member 26 protruding from the mounting face 251 is arc-shaped. On the one hand, the arc-shaped structure facilitates the change of the shape of the elastic member 26 when abutting against the electrode plate P, and the deformation of the elastic member 26 in turn enables the uniform contact between the electrode plate P and the clamping member; on the other hand, the arc-shaped structure can reduce damage to the electrode plate P.

According to some embodiments of the present application, as shown in FIG. 13, a plurality of elastic members 26 are provided, and the plurality of elastic members 26 are arranged at intervals in the lengthwise direction of the first clamping member 24 (or the second clamping member 25). It should be noted that a plurality of elastic members 26 being provided here means that a plurality of elastic members are arranged on a single clamping member. For example, when the elastic members 26 are only arranged on the first clamping member 24, a plurality of elastic members 26 are arranged on the first clamping member 24 at intervals in the lengthwise direction of the first clamping member 24 (or the second clamping member 25); alternatively, when the elastic members 26 are only arranged on the second clamping member 25, a plurality of elastic members 26 are arranged on the second clamping member 25 at intervals in the lengthwise direction of the first clamping member 24 (or the second clamping member 25); still alternatively, when the elastic members 26 are arranged on both the first clamping member 24 and the second clamping member 25, a plurality of elastic members 26 are arranged on the first clamping member 24 in the lengthwise direction of the first clamping member 24 (or the second clamping member 25), and a plurality of elastic members 26 are arranged on the second clamping member 25 in the lengthwise direction of the delivery mechanism 20.

According to some other embodiments of the present application, the elastic member 26 may also be arranged in such a way that one elastic member 26 is arranged on the first clamping member 24, the elastic member 26 extends in the lengthwise direction of the first clamping member 24 (or the second clamping member 25), and the elastic member 26 can cover the electrode plate P in the lengthwise direction of the first clamping member 24 (or the second clamping member 25); alternatively, one elastic member 26 is arranged on the second clamping member 25, the elastic member 26 extends in the lengthwise direction of the first clamping member 24 (or the second clamping member 25), and the elastic member 26 can cover the electrode plate P in the lengthwise direction of the first clamping member 24 (or the second clamping member 25); still alternatively, one elastic member 26 is arranged on each of the first clamping member 24 and the second clamping member 25, the elastic member 26 on the first clamping member 24 extends in the lengthwise direction of the first clamping member 24 (or the second clamping member 25), and can cover the electrode plate P in the lengthwise direction of the first clamping member 24 (or the second clamping member 25), and the elastic member 26 on the second clamping member 25 extends in the lengthwise direction of the first clamping member 24 (or the second clamping member 25), and can cover the electrode plate P in the lengthwise direction of the first clamping member 24 (or the second clamping member 25).

According to some embodiments of the present application, as shown in FIG. 13, each of the first clamping member 24 and the second clamping member 25 is of a wedge-shaped structure, so as to extend into an area with a narrow space to meet different feeding requirements. For example, the first clamping member 24 and the second clamping member 25 can be close to two rollers of the rolling device, so as to feed the electrode plate P between the two rollers.

FIG. 15 shows a schematic assembly diagram of a feeding device according to an embodiment of the present application. According to some embodiments of the present application, as shown in FIG. 15, the feeding device 100 further includes a third linear driving mechanism 13 for driving the first linear driving mechanism 11 and the second linear driving mechanism 12 to move synchronously in a third direction Y, the third direction Y being perpendicular to the first axis Z1, and the third direction Y intersecting the first direction X1 and the second direction X2. The third linear driving mechanism 13 drives the first linear driving mechanism 11 and the second linear driving mechanism 12 to move synchronously in the third direction Y, so that the position of the delivery mechanism 20 in the third direction Y can be adjusted so as to meet the requirements for the feeding posture of the electrode plate P and achieve precise feeding.

In the related art, the feeding driving mechanism simultaneously drives the position adjusting mechanism and the rotation adjusting mechanism, and in the present application, the cooperation between the first linear driving mechanism 11 and the second linear driving mechanism 12 and the delivery mechanism 20 simplifies the structure for feeding drive and posture adjustment functions, the feeding drive and posture adjustment are integrated, and the first linear driving mechanism 11 and the second linear driving mechanism 12 for feeding drive are only used to drive the delivery mechanism 20 to feed and adjust the posture of the delivery mechanism 20, without driving the third linear driving mechanism 13 for position adjustment to move in the feeding direction X, which reduces the feeding load and energy consumption.

It should be noted that the third direction Y may be perpendicular to the feeding direction X, and when the first direction X1 is parallel to the second direction X2, the third direction Y is perpendicular to the first direction X1 and the second direction X2. The third linear driving mechanism 13 drives the first linear driving mechanism 11 and the second linear driving mechanism 12 to move in the third direction Y in a plane parallel to the plane where the first direction X1 and the second direction X2 are located, so as to adjust the position of the delivery mechanism 20 and the electrode plate P carried by the delivery mechanism 20 in the third direction Y.

According to some embodiments of the present application, as shown in FIG. 15, the feeding device 100 further includes a first mount 41. The first linear driving mechanism 11 and the second linear driving mechanism 12 are fixed on the first mount 41, and the third linear driving mechanism 13 is connected to the first mount 41. The mounting and positioning of the first linear driving mechanism 11 and the second linear driving mechanism 12 are realized by means of the first mount 41, ensuring that the first linear driving mechanism 11 and the second linear driving mechanism 12 can move synchronously under the action of the third linear driving mechanism 13 to ensure the movement precision.

As shown in FIG. 15, the first linear driving mechanism 11 and the second linear driving mechanism 12 are fixed on the first mount 41, and the movement of the first mount 41 realizes synchronous movement of the first linear driving mechanism 11 and the second linear driving mechanism 12.

According to some embodiments of the present application, as shown in FIG. 15, the feeding device 100 further includes a second mount 42. The first mount 41 is slidably mounted on the second mount 42 in the third direction Y, and the third linear driving mechanism 13 is fixed on the second mount 42 and connected to the first mount 41 to drive the first mount 41 to move relative to the second mount 42 in the third direction Y. The first mount 41 is slidably fitted with the second mount 42, and the first mount 41 moves stably relative to the second mount 42 under the action of the third linear driving mechanism 13.

As shown in FIG. 15, the third linear driving mechanism 13 includes a driving electric motor 131, a lead screw 132 and a nut 133, the second mount 42 is provided with a slide rail 421 extending in the third direction Y, and the first mount 41 is slidably arranged on the slide rail 421. The driving electric motor 131 is mounted on the second mount 42, the lead screw 132 is connected to an output end of the driving electric motor 131, the nut 133 is mounted on the first mount 41, and the nut 133 is sheathed on the lead screw and is in a threaded fit with the lead screw 132. When the driving electric motor 131 is in operation, the driving electric motor 131 drives the lead screw 132 to rotate, and the nut 133 rotates with the lead screw 132. The nut 133 drives the first mount 41 to move relative to the second mount 42 along the slide rail 421 while rotating with the lead screw 132, so as to move the first linear driving mechanism 11 and the second linear driving mechanism 12 in the third direction Y, and in turn the delivery mechanism 20 and the electrode plate P carried by the delivery mechanism 20 in the third direction Y.

In other embodiments of the present application, the third linear driving mechanism 13 may also be a linear electric motor, and the first mount 41 is connected to the output end of the third linear driving mechanism 13, with a simple structure and convenience to maintain.

In other embodiments of the present application, the feeding mechanism may include only the second mount 42, the first linear driving mechanism 11 and the second linear driving mechanism 12 are both connected to the output end of the third linear driving mechanism 13, the first linear driving mechanism 11 and the second linear driving mechanism 12 are respectively movably connected to the slide rail 421 arranged in the third direction Y, and the output end reciprocates in the third direction Y to drive the first linear driving mechanism 11 and the second linear driving mechanism 12 to move synchronously, so as to move the delivery mechanism 20 and the electrode plate P carried by the delivery mechanism 20 in the third direction Y.

The present application is not limited to the specific embodiments disclosed herein but includes all the technical solutions that fall within the scope of the claims.

## Claims

1. A feeding device (100), comprising:
a first linear driving mechanism (11) comprising a first output end (111), the first output end (111) being configured to reciprocate in a first direction (X1);
a second linear driving mechanism (12) comprising a second output end (121), the second output end (121) being configured to reciprocate in a second direction (X2);
a delivery mechanism (20), one end of which is rotatably connected to the first output end (111) around a first axis (Z1), the first axis (Z1) being perpendicular to the first direction (X1); and
an adjusting mechanism (30) configured to connect the other end of the delivery mechanism (20) to the second output end (121), such that the delivery mechanism (20) is able to be driven by the second output end (121) to rotate around the first axis (Z1), wherein
the delivery mechanism (20) comprises a first clamping member (24) and a second clamping member (25) that cooperate with each other to clamp a material,
**characterized in that**
the first clamping member (24) and/or the second clamping member (25) are/is provided with an elastic member (26), and the elastic member (26) is configured to abut against the material.

2. The feeding device (100) according to claim 1, wherein the adjusting mechanism (30) comprises a connector (31), one end of the connector (31) is rotatably connected to the second output end (121) around a second axis (Z2), and the other end of the connector (31) is rotatably connected to the delivery mechanism (20) around a third axis (Z3), the second axis (Z2) being perpendicular to the second direction (X2) and parallel to the first axis (Z1), and the third axis (Z3) being parallel to the second axis (Z2).

3. The feeding device (100) according to claim 1, wherein the adjusting mechanism (30) comprises a connector (31), one end of the connector (31) is rotatably connected to the second output end (121) around a second axis (Z2), the second axis (Z2) being perpendicular to the second direction (X2) and parallel to the first axis (Z1), and the other end of the connector (31) is slidably connected to the delivery mechanism (20).

4. The feeding device (100) according to claim 1, wherein the adjusting mechanism (30) comprises a slider (33), the slider (33) is arranged on one of the delivery mechanism (20) and the second output end (121), the other of the delivery mechanism (20) and the second output end (121) is provided with a sliding groove (32), and the slider (33) is slidably fitted within the sliding groove (32) and is rotatable around a second axis (Z2) relative to the sliding groove (32), the second axis (Z2) being perpendicular to the second direction (X2) and parallel to the first axis (Z1).

5. The feeding device (100) according to any one of claims 1-4, wherein the first clamping member (24) and/or the second clamping member (25) are/is provided with a mounting face, the mounting face (251) is provided with a groove (252), and the elastic member (26) is arranged in the groove (252) and protrudes from the mounting face (251).

6. The feeding device (100) according to claim 5, wherein a surface of the part of the elastic member (26) protruding from the mounting face (251) is arc-shaped.

7. The feeding device (100) according to one of the two preceding claims , wherein a plurality of elastic members (26) are provided, and the plurality of elastic members (26) are arranged at intervals in a lengthwise direction of the first clamping member (24).

8. The feeding device (100) according to any one of claims 1-4, wherein the delivery mechanism (20) further comprises a cylinder (27) for driving the first clamping member (24) and the second clamping member (25) to move close to or away from each other.

9. The feeding device (100) according to any one of claims 1-8, wherein the first direction (X1) is parallel to the second direction (X2).

10. The feeding device (100) according to any one of claims 1-8, further comprising:
a third linear driving mechanism (13) for driving the first linear driving mechanism (11) and the second linear driving mechanism (12) to move synchronously in a third direction (Y), the third direction (Y) being perpendicular to the first axis (Z1), and the third direction (Y) intersecting the first direction (X1) and the second direction (X2).

11. The feeding device (100) according to claim 10, further comprising:
a first mount (41), the first linear driving mechanism (11) and the second linear driving mechanism (12) being fixed on the first mount (41), and the third linear driving mechanism (13) being connected to the first mount (41).

12. The feeding device (100) according to claim 11, further comprising:
a second mount (42), the first mount (41) being slidably mounted on the second mount (42) in the third direction (Y), and the third linear driving mechanism (13) being fixed on the second mount (42) and connected to the first mount (41) to drive the first mount (41) to move relative to the second mount (42) in the third direction (Y).

13. A battery production apparatus, comprising:
a rolling device (500) for attaching an electrode plate (P) to a separator (M); and
a feeding device (100) according to any one of claims 1-12, the feeding device (100) being used to feed the electrode plate (P) into the rolling device (500).

## Patentansprüche

1. Zuführvorrichtung (100), umfassend:
einen ersten linearen Antriebsmechanismus (11), umfassend ein erstes Ausgangsende (111), wobei das erste Ausgangsende (111) so konfiguriert ist, dass es sich in einer ersten Richtung (X1) hin und her bewegt; einen zweiten linearen Antriebsmechanismus (12), umfassend ein zweites Ausgangsende (121), wobei das zweite Ausgangsende (121) so konfiguriert ist, dass es sich in einer zweiten Richtung (X2) hin und her bewegt; einen Abgabemechanismus (20), dessen eines Ende mit dem ersten Ausgangsende (111) um eine erste Achse (Z1) drehbar verbunden ist, wobei die erste Achse (Z1) senkrecht zu der ersten Richtung (X1) verläuft; und
einen Einstellmechanismus (30), der so konfiguriert ist, dass er das andere Ende des Abgabemechanismus (20) mit dem zweiten Ausgangsende (121) verbindet, so dass der Abgabemechanismus (20) von dem zweiten Ausgangsende (121) angetrieben werden kann, um sich um die erste Achse (Z1) zu drehen, wobei
der Abgabemechanismus (20) ein erstes Klemmelement (24) und ein zweites Klemmelement (25) umfasst, die miteinander zusammenwirken, um ein Material zu klemmen,
**dadurch gekennzeichnet, dass**
das erste Klemmelement (24) und/oder das zweite Klemmelement (25) mit einem elastischen Element (26) bereitgestellt sind/ist und das elastische Element (26) so konfiguriert ist, dass es an dem Material anliegt.

2. Zuführvorrichtung (100) nach Anspruch 1, wobei der Einstellmechanismus (30) ein Verbindungsstück (31) umfasst, wobei ein Ende des Verbindungsstücks (31) mit dem zweiten Ausgangsende (121) um eine zweite Achse (Z2) drehbar verbunden ist und das andere Ende des Verbinders (31) mit dem Abgabemechanismus (20) um eine dritte Achse (Z3) drehbar verbunden ist, wobei die zweite Achse (Z2) senkrecht zu der zweiten Richtung (X2) und parallel zu der ersten Achse (Z1) verläuft und die dritte Achse (Z3) parallel zu der zweiten Achse (Z2) verläuft.

3. Zuführvorrichtung (100) nach Anspruch 1, wobei der Einstellmechanismus (30) ein Verbindungsstück (31) umfasst, wobei ein Ende des Verbindungsstücks (31) mit dem zweiten Ausgangsende (121) um eine zweite Achse (Z2) drehbar verbunden ist, wobei die zweite Achse (Z2) senkrecht zu der zweiten Richtung (X2) und parallel zu der ersten Achse (Z1) verläuft und wobei das andere Ende des Verbindungsstücks (31) mit dem Abgabemechanismus (20) gleitend verbunden ist.

4. Zuführvorrichtung (100) nach Anspruch 1, wobei der Einstellmechanismus (30) einen Schieber (33) umfasst, der Schieber (33) an einem von dem Abgabemechanismus (20) und/oder dem zweiten Ausgangsende (121) angeordnet ist, der andere von dem Abgabemechanismus (20) und dem zweiten Ausgangsende (121) mit einer Gleitnut (32) bereitgestellt ist und der Schieber (33) innerhalb der Gleitnut (32) gleitend eingepasst ist und um eine zweite Achse (Z2) relativ zu der Gleitnut (32) drehbar ist, wobei die zweite Achse (Z2) senkrecht zu der zweiten Richtung (X2) und parallel zu der ersten Achse (Z1) verläuft.

5. Zuführvorrichtung (100) nach einem der Ansprüche 1-4, wobei das erste Klemmelement (24) und/oder das zweite Klemmelement (25) mit einer Montagefläche bereitgestellt sind/ist, die Montagefläche (251) mit einer Nut (252) bereitgestellt ist und das elastische Element (26) in der Nut (252) angeordnet ist und aus der Montagefläche (251) hervorsteht.

6. Zuführvorrichtung (100) nach Anspruch 5, wobei eine Oberfläche des Teils des elastischen Elements (26), der aus der Montagefläche (251) hervorsteht, bogenförmig ist.

7. Zuführvorrichtung (100) nach einem der zwei vorhergehenden Ansprüche, wobei eine Vielzahl von elastischen Elementen (26) bereitgestellt sind und die Vielzahl von elastischen Elementen (26) in Abständen in Längsrichtung des ersten Klemmelements (24) angeordnet sind.

8. Zuführvorrichtung (100) nach einem der Ansprüche 1-4, wobei der Abgabemechanismus (20) ferner einen Zylinder (27) zum Antreiben des ersten Klemmelements (24) und das zweiten Klemmelements (25) umfasst, damit sie sich aufeinander zu oder voneinander weg bewegen.

9. Zuführvorrichtung (100) nach einem der Ansprüche 1-8, wobei die erste Richtung (X1) parallel zu der zweiten Richtung (X2) verläuft.

10. Zuführvorrichtung (100) nach einem der Ansprüche 1-8, ferner umfassend:
einen dritten linearen Antriebsmechanismus (13) zum Antreiben des ersten linearen Antriebsmechanismus (11) und des zweiten linearen Antriebsmechanismus (12), um sich synchron in einer dritten Richtung (Y) zu bewegen, wobei die dritte Richtung (Y) senkrecht zu der ersten Achse (Z1) liegt und die dritte Richtung (Y) die erste Richtung (X1) und die zweite Richtung (X2) schneidet.

11. Zuführvorrichtung (100) nach Anspruch 10, ferner umfassend:
eine erste Befestigung (41), wobei der erste lineare Antriebsmechanismus (11) und der zweite lineare Antriebsmechanismus (12) an der ersten Befestigung (41) fixiert sind und der dritte lineare Antriebsmechanismus (13) mit der ersten Befestigung (41) verbunden ist.

12. Zuführvorrichtung (100) nach Anspruch 11, ferner umfassend:
eine zweite Befestigung (42), wobei die erste Befestigung (41) an der zweiten Befestigung (42) in der dritten Richtung (Y) gleitend befestigt ist und der dritte lineare Antriebsmechanismus (13) an der zweiten Befestigung (42) fixiert und mit der ersten Befestigung (41) verbunden ist, um die erste Befestigung (41) anzutreiben, damit sie sich relativ zur zweiten Befestigung (42) in der dritten Richtung (Y) bewegt.

13. Batterieproduktionsvorrichtung, umfassend:
eine Walzvorrichtung (500) zum Anbringen einer Elektrodenplatte (P) an einem Abscheider (M); und eine Zuführvorrichtung (100) nach einem der Ansprüche 1-12, wobei die Zuführvorrichtung (100) zum Zuführen der Elektrodenplatte (P) in die Walzvorrichtung (500) verwendet wird.

## Revendications

1. Dispositif d'alimentation (100) comprenant :
un premier mécanisme d'entraînement linéaire (11) comprenant une première extrémité de sortie (111), la première extrémité de sortie (111) étant conçue pour effectuer un mouvement alternatif dans une première direction (X1) ;
un deuxième mécanisme d'entraînement linéaire (12) comprenant une seconde extrémité de sortie (121), la seconde extrémité de sortie (121) étant conçue pour effectuer un mouvement alternatif dans une deuxième direction (X2) ;
un mécanisme de distribution (20), dont une extrémité est reliée rotative à la première extrémité de sortie (111) autour d'un premier axe (Z1), le premier axe (Z1) étant perpendiculaire à la première direction (X1) ; et
un mécanisme de réglage (30) conçu pour relier l'autre extrémité du mécanisme de distribution (20) à la seconde extrémité de sortie (121), de sorte que le mécanisme de distribution (20) puisse être entraîné en rotation autour du premier axe (Z1) par la seconde extrémité de sortie (121),
le mécanisme de distribution (20) comprenant un premier élément de serrage (24) et un second élément de serrage (25) coopérant l'un avec l'autre afin de fixer un matériau,
**caractérisé en ce que**
le premier élément de serrage (24) et/ou le second élément de serrage (25) sont munis d'un élément élastique (26), et l'élément élastique (26) est conçu pour venir en butée contre le matériau.

2. Le dispositif d'alimentation (100) selon la revendication 1, dans lequel le mécanisme de réglage (30) comprend un élément de liaison (31), une extrémité de l'élément de liaison (31) est reliée rotative à la seconde extrémité de sortie (121) autour d'un deuxième axe (Z2), et l'autre extrémité de l'élément de liaison (31) est reliée rotative au mécanisme de distribution (20) autour d'un troisième axe (Z3), le deuxième axe (Z2) étant perpendiculaire à la deuxième direction (X2) et parallèle au premier axe (Z1), et le troisième axe (Z3) étant parallèle au deuxième axe (Z2).

3. Le dispositif d'alimentation (100) selon la revendication 1, dans lequel le mécanisme de réglage (30) comprend un élément de liaison (31), une extrémité de l'élément de liaison (31) est reliée rotative à la seconde extrémité de sortie (121) autour d'un deuxième axe (Z2), le deuxième axe (Z2) étant perpendiculaire à la deuxième direction (X2) et parallèle au premier axe (Z1), et l'autre extrémité de l'élément de liaison (31) est reliée coulissante au mécanisme de distribution (20).

4. Le dispositif d'alimentation (100) selon la revendication 1, dans lequel le mécanisme de réglage (30) comprend un coulisseau (33), le coulisseau (33) est agencé sur l'un parmi le mécanisme de distribution (20) et la seconde extrémité de sortie (121), l'autre parmi le mécanisme de distribution (20) et la seconde extrémité de sortie (121) est muni d'une rainure de coulissement (32), et le coulisseau (33) est monté coulissant à l'intérieur de la rainure de coulissement (32) et peut tourner autour d'un deuxième axe (Z2) par rapport à la rainure de coulissement (32), le deuxième axe (Z2) étant perpendiculaire à la deuxième direction (X2) et parallèle au premier axe (Z1).

5. Le dispositif d'alimentation (100) selon l'une quelconque des revendications 1-4, dans lequel le premier élément de serrage (24) et/ou le second élément de serrage (25) sont munis d'une face de montage, la face de montage (251) est munie d'une rainure (252), et l'élément élastique (26) est agencé dans la rainure (252) et fait saillie à partir de la face de montage (251).

6. Le dispositif d'alimentation (100) selon la revendication 5, dans lequel une surface de la partie de l'élément élastique (26) faisant saillie à partir de la face de montage (251) prend une forme en arc.

7. Le dispositif d'alimentation (100) selon l'une quelconque des deux revendications précédentes, dans lequel plusieurs éléments élastiques (26) sont prévus, et les plusieurs éléments élastiques (26) sont agencés à intervalles dans un sens longitudinal du premier élément de serrage (24).

8. Le dispositif d'alimentation (100) selon l'une quelconque des revendications 1-4, dans lequel le mécanisme de distribution (20) comprend en outre un cylindre (27) permettant d'amener le premier élément de serrage (24) et le second élément de serrage (25) à se rapprocher ou à s'éloigner l'un de l'autre.

9. Le dispositif d'alimentation (100) selon l'une quelconque des revendications 1-8, dans lequel la première direction (X1) est parallèle à la deuxième direction (X2).

10. Le dispositif d'alimentation (100) selon l'une quelconque des revendications 1-8, comprenant en outre :
un troisième mécanisme d'entraînement linéaire (13) permettant d'amener le premier mécanisme d'entraînement linéaire (11) et le deuxième mécanisme d'entraînement linéaire (12) à se déplacer de manière synchrone dans une troisième direction (Y), la troisième direction (Y) étant perpendiculaire au premier axe (Z1), et la troisième direction (Y) croisant la première direction (X1) et la deuxième direction (X2).

11. Le dispositif d'alimentation (100) selon la revendication 10, comprenant en outre :
une première monture (41), le premier mécanisme d'entraînement linéaire (11) et le deuxième mécanisme d'entraînement linéaire (12) étant fixés sur la première monture (41), et le troisième mécanisme d'entraînement linéaire (13) étant relié à la première monture (41).

12. Le dispositif d'alimentation (100) selon la revendication 11, comprenant en outre :
une seconde monture (42), la première monture (41) étant montée coulissante sur la seconde monture (42) dans la troisième direction (Y), et le troisième mécanisme d'entraînement linéaire (13) étant fixé sur la seconde monture (42) et relié à la première monture (41) afin d'amener la première monture (41) à se déplacer par rapport à la seconde monture (42) dans la troisième direction (Y).

13. Appareil de production de batteries, l'appareil comprenant :
un dispositif de laminage (500) permettant d'attacher une plaque-électrode (P) à un séparateur (M) ; et
un dispositif d'alimentation (100) selon l'une quelconque des revendications 1-12, le dispositif d'alimentation (100) étant utilisé pour alimenter la plaque-électrode (P) au dispositif de laminage (500).
